# EUROPÄISCHE PATENTSCHRIFT

(11) **EP 0 688 708 B1**
(45) Veröffentlichungstag und Bekanntmachung des Hinweises auf die Patenterteilung: **02.12.1998**
(21) Anmeldenummer: 95109626.2
(22) Anmeldetag: 21.06.1995
(51) Int. Cl.: B60T 13/72, B60T 13/52

(54) **Pneumatischer Bremkraftverstärker und Verfahren zu dessen Herstellung**
Pneumatic brake booster and production method therefor
Amplificateur pneumatique de freinage et son procédé de fabrication

(30) Priorität: 23.06.1994 DE 4422027
(43) Veröffentlichungstag der Anmeldung: 27.12.1995
(73) Patentinhaber: LUCAS INDUSTRIES PUBLIC LIMITED COMPANY, Solihull, West Midlands B91 3TX (GB)
(72) Erfinder: Eick, Rüdiger, Dr., D-56283 Pfaffenheck (DE)
(74) Vertreter: Schmidt, Steffen J., Dipl.-Ing.

(56) Entgegenhaltungen:
- WO-A-93/21048
- WO-A-94/11226

## Beschreibung

Die vorliegende Erfindung betrifft einen pneumatischen Bremskraftverstärker mit den Merkmalen des Oberbegriffs des Anspruchs 1, wie er in der DE 24 15 683 beschrieben ist.

Eine ähnliche Anordnung ist zum Beispiel aus der DE 42 38 333 A1 bekannt.

Der Nachteil dieser Anordnung ist die aufwendige Montage aufgrund der Vielzahl von Bauteilen. Außerdem ist das Einbringen und Plazieren der einzelnen Bauteile in das langgestreckte Verstärkergehäuseteil nur mit speziellem Werkzeug möglich. Ein weiterer Nachteil ist die relativ ungünstige Wärmeabfuhr der Verlustleistung von der Elektromagnetanordnung, weshalb diese größer dimensioniert sein muß, als die Betätigungskräfte der Steuerventilanordnung es erfordern. Schließlich beeinträchtigt dieser Aufbau die Dauerbetriebsfestigkeit der Anordnung.

Die Erfindung liegt daher die Zielsetzung zugrunde, den eingangs genannten pneumatischen Bremskraftverstärker so zu verbessern, daß er kostengünstiger herstellbar ist und in seinen Betriebseigenschaften verbessert ist. Erfindungsgemäß ist dazu der eingangs beschriebene Bremskraftverstärker durch die Merkmale des kennzeichnenden Teils von Anspruch 1 weitergebildet.

Damit wird erreicht, daß ein Bauteil, nämlich ein erster Abschnitt des Ventilgehäuseteils wenigstens zwei Funtionen erfüllt: Ummantelung der Steuerventilanordnung und Teil der Elektromagnetanordnung zu sein. Die Ummantelung stellt die mechanische Festigkeit der Anordnung sicher. Durch die Teilung des Ventilgehäuseteils in wenigstens zwei Abschnitte können einzelne Bauteile leichter in dem jeweiligen Abschnitt (vor-)montiert werden und anschließend mit den Bauteilen in dem anderen Abschnitt schnitt vereint werden. Da auch die bisher im Stand der Technik notwendige separate Magnetflußrückführung entfällt, da sie in das Gehäuse integriert ist, kann bei gleichbleibendem Gesamtquerschnitt die Elektromagnetanordnung größer gebaut werden, was eine geringere Leistungsdichte bedeutet.

Eine weitere Integration von Funktionen in ein Bauteil kann darin bestehen, daß der erste Abschnitt des Ventilgehäuseteils an seiner Außenseite wenigstens eine Aufnahme für Teile des Verstärkers (z.B. eine Wandung des Verstärkergehäuses, eine bewegliche Wand zwischen der Arbeitskammer und der Unterdruckkammer, Dichtungen) aufweist.

Vorzugsweise ist der erste Abschnitt des Ventilgehäuseteils aus Weicheisen gebildet, das sowohl gute magnetische Eigenschaften, als auch eine zufriedenstellende Wärmeleitfähigkeit hat. Es sind jedoch auch andere Materialien mit gleichen oder gar besseren entsprechenden Eigenschaften mit Vorteil verwendbar.

Zur Sicherstellung der Funktion des Bremskraftverstärkers ist es vorteilhaft, wenn der erste und der zweite Abschnitt des Ventilgehäuseteils formschlüssig und luftdicht miteinander verbunden sind. Der erste Abschnitt des Ventilgehäuseteils kann mit dem zweiten Abschnitt auch dadurch verbunden werden, daß der zweite Abschnitt durch Angießen oder Anspritzen von Kunststoff um den Rand des ersten Abschnitt hergestellt wird.

Vorzugsweise sind in dem ersten Abschnitt des Ventilgehäuseteils eine Magnetspulenanordnung und ein Anker der Elektromagnetanordnung aufgenommen.

Um einen kompakten Aufbau des Bremskraftverstärkers zu ermöglichen und um die Wärme gut nach außen ableiten zu können, ist es vorteilhaft, wenn die Elektromagnetanordnung als Topfmagnet mit einem axial verschiebbaren Anker ausgestaltet ist. Eine Alternative dazu wäre auch eine Drehmagnetanordnung, die ggf. über eine Hebel- oder Schraubanordnung eine Betätigung des Steuerventils bewirkt.

Bei einer bevorzugten Ausführungsform des erfindungsgemäßen Bremskraftverstärkers weist die Magnetspulenanordnung an ihrem einen axialen Ende ein Ankergegenstück und an ihrem anderen axialen Ende ein den magnetischen Fluß leitendes Formteil auf, wobei die Magnetspulenanordnung, das Ankergegenstück und das den magnetischen Fluß leitende Formteil einen Ankerraum bilden, in dem der Anker bewegbar ist. Das Ankergegenstück kann auch in den innerhalb der Magnetspulenanordnung gebildeten Ankerraum hineinragen. Um möglichst definierte Druckverhältnisse zu haben und um pneumatische Nebenschlüsse durch die Elektromagnetanordnung hindurch zu verhindern, ist es vorteilhaft, wenn die Magnetspulenanordnung, das Ankergegenstück und das magnetischen Fluß leitende Formteil den Ankerraum luftdicht umgeben.

Insbesondere zur Gewichtseinsparung und wegen des verringerten Herstellungsaufwandes ist es vorteilhaft, wenn der zweite Abschnitt des Ventilgehäuseteils aus einem Kunststoff gebildet ist. Eine besonders bevorzugte Ausführungsform einer Verbindung zwi

schen dem ersten und dem zweiten Abschnitt des Ventilgehäuseteils ist dadurch gebildet, daß der erste und der zweite Abschnitt an ihren einander zugewandten Enden jeweils einen nach innen bzw. nach außen abgewinkelten Bund aufweisen, wobei der nach innen abgewinkelte Bund und der nach außen abgewinkelte Bund ineinander greifen. Damit können die beiden Abschnitte einfach soweit ineinander geschoben werden, bis die beiden Bunde aneinander anliegen.

Eine weitere Zuordnung einer Funktion zu dem ersten und/ oder dem zweiten Abschnitt des Ventilgehäuseteils kann dadurch erreicht werden, daß wenigstens ein Kanal für die Verbindungen zwischen der Unterdruckkammer und der Arbeitskammer, oder der Arbeitskammer und der Umgebungsatmosphäre darin angeordnet sind.

Um einen möglichst kompakten Aufbau zu erreichen, können auch bei dem Ankergegenstück und/ oder dem den magnetischen Fluß leitenden Formteil mehrere Funktionen integriert sein. Z.B. können diese mit wenigstens einer Ausnehmung versehen sein, die zumindest einen Teil des Kanals bildet.

In diesem Fall ist vorzugsweise jede Ausnehmung von Bereichen begrenzt, die magnetischen Fluß leiten. Dabei sind die mit der Innenwandung des ersten Abschnitts des Steuerventilgehäuses in Berührung stehenden Bereiche so bemessen, daß der magnetische Fluß nicht begrenzt wird. Andererseits sind auch die Ausnehmungen so bemessen, daß ein ausreichender Kanalquerschnitt für die Verbindung(en) zur Verfügung steht.

Zur Herstellung eines pneumatischen Bremskraftverstärkers, wie er vorstehend beschrieben ist, wird erfindungs gemäß folgendes Verfahren eingesetzt: Bereitstellen eines ersten Abschnittes eines Ventilgehäuseteils, Bereitstellen eines zweiten Abschnittes eines Ventilgehäuseteils, Ausbilden eines ersten Verbindungselementes an dem ersten Abschnitt, Ausbilden eines zur Zusammenwirkung mit dem ersten Verbindungselement eingerichteten zweiten Verbindungselementes an dem zweiten Abschnitt, und Verbinden des ersten Abschnittes des Ventilgehäuseteils mit dem zweiten Abschnitt des Ventilgehäuseteils, wobei, wenn das erste Verbindungselement und das zweite Verbindungselement jeweils als ein an einem Ende des ersten und des zweiten Abschnittes des Ventilgehäuseteils ein nach innen bzw. nach außen abgewinkelter Bund geformt werden, der erste Abschnitt des Ventilgehäuseteils und der zweite Abschnitt des Ventilgehäuseteils in ihren Abmessungen so gestaltet sind, daß sie ineinander schiebbar sind, wobei der nach innen abgewinkelte Bund und der nach außen abgewinkelte Bund ineinander greifen und einen Anschlag bilden. Auf diese Weise kann die Montage stark vereinfacht werden, da die Vormontage einzelner Baugruppen in den jeweiligen Gehäuseabschnitten möglich ist.

Zur luftdichten Abdichtung der Anordnung wird vor dem Ineinanderschieben des ersten und des zweiten Abschnitts des Ventilgehäuseteils zwischen den nach innen abgewinkelten Bund und den nach außen abgewinkelten Bund eine Dichtung eingelegt.

Um in dem ersten Abschnitt des Ventilgehäuseteils die Elektromagnetanordnung zu bilden, werden in diesen Abschnitt ein den magnetischen Fluß leitendes Formteil, ein Anker, eine Magnetspulenanordnung und ein Ankergegenstück eingelegt.

Um den magnetischen Kreis zu schließen, wird der erste Abschnitt des Ventilgehäuseteils mit dem Ankergegenstück und/ oder dem den magnetischen Fluß leitenden Formteil fest verbunden. Dies kann in besonders einfacher Weise formschlüssig, vorzugsweise durch Rollieren oder Verstemmen geschehen.

Unter Bezugnahme auf die Zeichnung wird anhand der nachfolgenden Beschreibung eine Ausführungsform eines pneumatischen Bremskraftverstärkers gemäß der Erfindung erläutert, woraus sich auch weitere Eigenschaften, Vorteile und Abwandlungsmöglichkeiten der Erfindung ergeben. In der Zeichnung zeien:
- Fig. 1: eine Ausführungsform eines Steuerventils für einen pneumatischen Bremskraftverstärkers gemäß der Erfindung in einer seitlichen teilweise geschnittenen schematischen Darstellung,
- Fig. 2: ein magnetischen Fluß leitendes Formteil für das Steuerventil aus Fig. 1 in einer schematischen Draufsicht, und
- Fig. 3: ein Ankergegenstück für das Steuerventil aus Fig. 1 in einer schematischen Draufsicht.

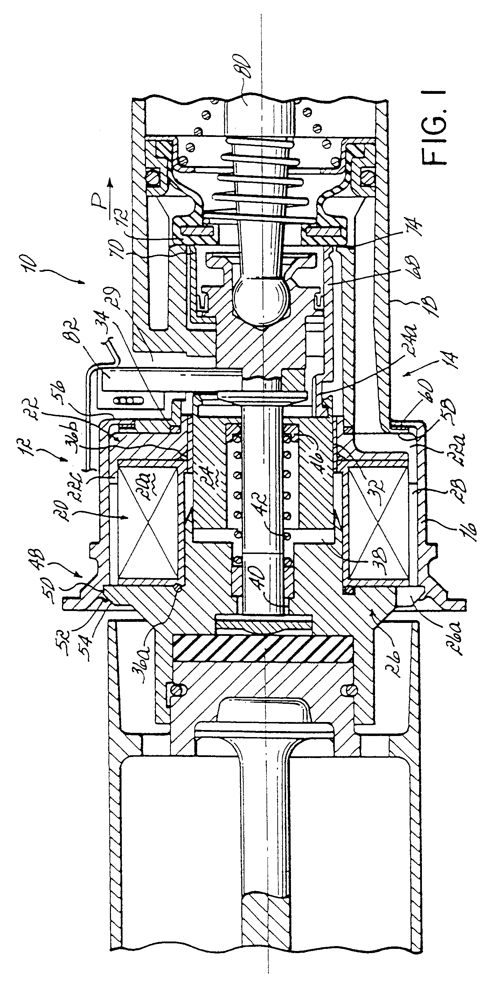

In Fig. 1 ist eine Steuerventilanordnung 10 und eine Elektromagnetanordnung 12 eines pneumatischen Bremskraftverstärkers gezeigt. Die Steuerventilanordnung 10 und die Elektromagnetanordnung 12 sind in einem Ventilgehäuse 14 aufgenommen, das mit ei(nicht gezeigten) Verstärkergehäuseteil zusammen einen pneumatischen Bremskraftverstärker enthält. Das Ventilgehäuse 14 ist zweiteilig ausgebildet. In einem ersten Abschnitt 16 des Ventilgehäuseteils 14 ist die Elektromagnetanordnung 12 vorgesehen. Dieser erste Abschnitt 16 ist mit einem zweiten Abschnitt 18 des Ventilgehäuseteils 14 verbunden, in dem die Steuerventilanordnung 10 aufgenommen ist.

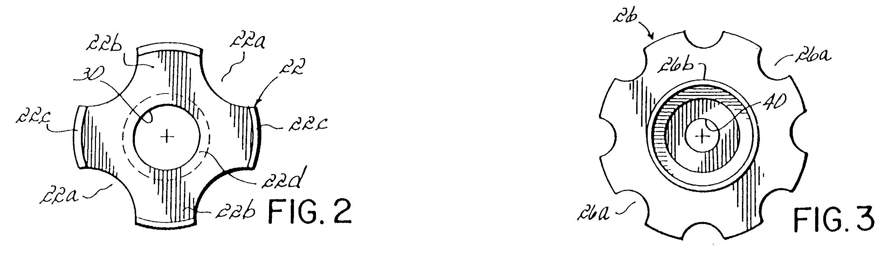

Der erste Abschnitt 16 des Ventilgehäuseteils 14 ist aus Weicheisen hergestellt und bildet einen magnetischen Rückschluß für die Elektromagnetanordnung 12. Dazu ist in den ersten Abschnitt 16 des Ventilgehäuseteils 14 eine Magnetspulenanordnung 20, ein magnetischen Fluß leitendes Formteil 22, ein Anker 24 und ein Ankergegenstück 26 eingeführt. Das den magnetischen Fluß leitende Formteil 22 und das Ankergegenstück 26 sind in den Fig. 2 und 3 jeweils in der Draufsicht veranschaulicht.

Das Formteil 22 ist in der Draufsicht im wesentlichen kreisrund und hat Aussparungen 22a, die Teile von Kanälen 28, 29für die Verbindungen zwischen einer (nicht gezeigten) Unterdruckkammer und einer (ebenfalls nicht gezeigten) Arbeitskammer oder für Verbindungen von der (nicht gezeigten) Arbeitskammer zur Umgebungsatmosphäre darstellen.

Die Ausnehmungen 22a sind jeweils durch Bereiche 22b, 22c begrenzt, über die das Formteil 22 mit dem ersten Abschnitt 16 des Ventilgehäuseteils 14 in magnetisch leitender Verbindung steht. In einer Mittelbohrung 30 in dem Formteil 22 ist der Anker 24 über eine Gleitschicht 32 getrennt aufgenommen.

Das Formteil 22 hat an seinem Innendurchmesser einen in die eine Richtung (zu dem zweiten Abschnitt 18 hin) abstehenden Ringbund 22d und an seinem Außendurchmesser einen in die andere Richtung (zu dem Verstärkergehäuse hin) abstehenden Ringbund 22c. Über den äußeren Ringbund 22c ist das Formteil 22 in dem ersten Abschnitt 16 des Ventilgehäuseteils 14 zentrisch aufgenommen. Über den inneren Ringbund 22d ist eine verlängerte Führung des Ankers 24 und eine definierte Aufnahme für einen Dichtungsring 34 gewährleistet.

Die Magnetspulenanordnung 20 ist durch einen Spulenkörper 20a und eine Spulenwicklung 20b gebildet. Die Magnetspulenanordnung 20 ist mittels Dichtungen 36a und 36b an den beiden inneren Enden des Spulenkörpers 20a gegen das Ankergegenstück 26 bzw. das Formteil 22 luftdicht abgeschlossen. Das Ankergegenstück 26 ragt in das Innere der Magnetspulenanordnung 20 und begrenzt von einer Seite einen Ankerraum 38, in dem der Anker 24 axial verschieblich aufgenommen ist.

Der Anker 24 hat an seinem aus dem Formteil 22 herausragenden Ende einen hakenförmigen Fortsatz 24a, der mit einem Teil der Ventilanordnung 10 zusammenwirkt, um bei axialer Verschiebung des Ankers 24 eine Betätigung der Ventilanordnung 10 zu erreichen.

Ähnlich wie das Formteil 22 hat das Ankergegenstück 26 eine im wesentlichen kreisrunde Querschnittsgestalt. Auch hier dienen Ausnehmungen 26a als Durchlässe von Verbindungen von oder zu den einzelnen Kammern des Bremskraftverstärkers.

Die Ausnehmungen 22a und 26a an dem Formteil 22 bzw. dem Ankergegenstück 26 und die Bereiche 22b und 26b zwischen den jeweiligen Ausnehmungen 22a und 26a sind jeweils so bemessen, daß einerseits keine Verjüngung des Strömungsquerschnitts der Kanäle 18, 19 entsteht und andererseits keine Begrenzung des magnetischen Flusses von dem Formteil 22 bzw. dem Ankergegenstück 26 zu dem ersten Abschnitt 16 des Ventilgehäuses 14 auftritt.

In einer Ringnut 26b ist der Dichtungsring 36a aufgenommen. Die Mittelbohrung 40 ist als Stufenbohrung ausgeführt um eine Schraubenfeder 42 abzustützen, die den Anker 24 über einen Ring 44 von dem Ankergegenstück 26 wegdrängt.

Der im wesentlichen hohlzylindrische Abschnitt 16 des Ventilgehäuseteils 14 weist an seiner äußeren Mantelfläche eine Aufnahme 48 für eine bewegliche Wand, Dichtungen und/oder Teile der Wandungen des Verstärkergehäuseteils auf.

Im Bereich der Aufnahme 48 ist an der innenliegenden Wandung des ersten Abschnitts 16 des Ventilgehäuseteils 14 eine Abstufung 50 eingearbeitet, in die der äußere Rand des Ankergegenstücks 26 eingepaßt ist. Durch ein Rollier- oder Bördelverfahren wird ein Vorsprung 52 an dem vorderen Ende des ersten Abschnitts 16 gegen eine abgeschrägte umlaufende Fläche 54 an dem Ankergegenstück 26 so gepreßt, daß eine magnetischen Fluß leitende Verbindung zwischen dem ersten Abschnitt 16 des Ventilgehäuseteils 14 und dem Ankergegenstück 26 entsteht.

An dem gegenüberliegenden Ende des ersten Abschnitts 16 des Ventilgehäuseteils 14 ist ein nach innen gerichteter rechtwinklig abgewinkelter Bund 56 ausgebildet.

Ein entsprechend geformter nach außen rechtwinklig abgewinkelter Bund 58 an dem zweiten Abschnitt 18 des Ventilgehäuseteils 14 ist so gestaltet, daß der zweite Abschnitt 16 in Richtung des Pfeiles P hindurchgeschoben werden kann und die beiden Bünde 56, 58 einen Anschlag bilden. Durch den Anschlag ein vollständiges Hindurchziehen des zweiten Abschnitts 18 durch den ersten Abschnitt 16 verhindert. Um eine luftdichte Anordnung zu erzielen, ist zwischen den ersten Bund 56 und den zweiten Bund 58 eine umlaufende Ringdichtung 60 eingelegt.

Bei der Montage des Ventilgehäuses 14 wird in den ersten Abschnitt 16 unter Zwischenlage der Ringdichtung 60 der zweite Abschnitt 18 (ggf. mit bereits darin montierter Steuerventilanordnung 10) eingeschoben, bis die beiden Bünde 56, 58 aneinanderliegen. Anschließend wird das Formteil 22 mit dem Dichtring 34 in den ersten Abschnitt 16 eingeführt. Dann folgt die Magnetspulenanordnung 20 mit der Dichtung 36b und das Ankergegenstück 26, die Schraubenfeder 42 mit dem Ring 44. Anschließend wird der erste Abschnitt 16 durch den Rollier- oder Bördelvorgang delvorgang mit dem Ankergegenstück 26 fest und formschlüssig verbunden.

Wenn die Magnetspulenanordnung 20 mit elektrischem Strom beaufschlagt wird, ist die sich aufbauende magnetische Kraft bestrebt, den Anker 24 entgegen der Kraft der Schraubenfeder 42 zu bewegen. Diese Bewegung wird auf das starr mit dem Anker 24 gekoppelte Ventilelement 68 übertragen, wodurch dieser einen Ventilsitz 70 freigibt, nachdem ein Dichtungselement 72 ein ringförmiges abdichtendes Ventilelement 74 zu dem Kanal 28 zu der Unterdruckkammer geschlossen hat.

Wenn der elektrische Strom von der Magnetspulenanordnung 20 abgeschaltet wird, wird der Anker 24 durch die Schraubenfeder 42 wieder in seine Ausgangslage zurückbewegt. Das mit dem Anker 24 gekoppelte Ventilelement 68 bewegt sich dann auf den Ventilsitz 70 zu und verschließt damit die Verbindung der Arbeitskammer zur Umgebungsathmosphäre.

Da das gesamte Steuerventilgehäuse während der Betätigung sich in Richtung auf das Verstärkergehäuse bewegt hat, ist der Rückstellhub nicht durch den Anschlag eines an der Betätigungsstange 80 befestigten Riegels 82 am Verstärkergehäuse begrenzt. Das Steuerventilgehäuse kann daher den Ventilsitz 72 soweit mitnehmen, daß sich dieser von dem Ventilelement 74 löst und die Verbindung von der Unterdruckkammer zur Arbeitskammer öffnet. Damit bricht die Druckdifferenz zusammen und das Steuerventilgehäuse wird wieder in seine Ausgangslage zurückgeführt.

## Patentansprüche

1. Pneumatischer Bremskraftverstärker mit
- einem eine Unterdruckkammer und eine von dieser durch eine bewegliche Wand getrennte Arbeitskammer enthaltenden Verstärkergehäuseteil und
- einem eine Steuerventilanordnung (10) und eine Elektromagnetanordnung (12) enthaltenden Ventilgehäuseteil (14), wobei
= die Steuerventilanordnung (10) sowohl durch eine Betätigungsstange (80) als auch durch die Elektromagnetanordnung (12) betätigbar ist, um Verbindungen zwischen der Unterdruckkammer und der Arbeitskammer, oder der Arbeitskammer und der Umgebungsatmosphäreherzustellen,
- das Ventilgehäuseteil (14) mehrere getrennte Abschnitte (16, 18) aufweist, dadurch gekennzeichnet, daß
- zumindest ein erster Abschnitt (16) des Ventilgehäuseteils (14)
= wenigstens teilweise als magnetischer Rückschluß der Elektromagnetanordnung (12) ausgestaltet und
= mit einem zweiten Abschnitt (18) des Ventilgehäuseteils (14) verbunden ist.

2. Pneumatischer Bremskraftverstärker nach Anspruch 1, dadurch gekennzeichnet, daß
- der erste Abschnitt (16) des Ventilgehäuseteils (14) an seiner Außenseite wenigstens eine Aufnahme (48) für Teile des Verstärkers aufweist.

3. Pneumatischer Bremskraftverstärker nach Anspruch 1 oder 2, dadurch gekennzeichnet, daß
- der erste Abschnitt (16) des Ventilgehäuseteils (14) aus Weicheisen gebildet ist.

4. Pneumatischer Bremskraftverstärker nach einem der vorhergehenden Ansprüche, dadurch gekennzeichnet, daß
- der erste Abschnitt (16) des Ventilgehäuseteils (14) und der zweite Abschnitt (18) des Ventilgehäuseteils (14) formschlüssig und/ oder luftdicht miteinander verbunden sind.

5. Pneumatischer Bremskraftverstärker nach einem der vorhergehenden Ansprüche, dadurch gekennzeichnet, daß
- in dem ersten Abschnitt (16) eine Magnetspulenanordnung (20) und ein Anker (24) der Elektromagnetanordnung (12) aufgenommen sind.

6. Pneumatischer Bremskraftverstärker nach einem der vorhergehenden Ansprüche, dadurch gekennzeichnet, daß
- die Elektromagnetanordnung (12) als Topfmagnet ausgestaltet ist.

7. Pneumatischer Bremskraftverstärker nach dem vorhergehenden Anspruch, dadurch gekennzeichnet, daß
- die Magnetspulenanordnung (20) an ihrem einen axialen Ende ein Ankergegenstück (26) und an ihrem anderen axialen Ende ein magnetischen Fluß leitendes Formteil (22) aufweist.

8. Pneumatischer Bremskraftverstärker nach dem vorhergehenden Anspruch, dadurch gekennzeichnet, daß
- die Magnetspulenanordnung (20), das Ankergegenstück (26) und das magnetischen Fluß leitende Formteil (22) einen Ankerraum (38) bilden, in dem der Anker (24) bewegbar ist.

9. Pneumatischer Bremskraftverstärker nach dem vorhergehenden Anspruch, dadurch gekennzeichnet, daß
- die Magnetspulenanordnung (20), das Ankergegenstück (26) und das magnetischen Fluß leitende Formteil (22) den Ankerraum (38) luftdicht umgeben.

10. Pneumatischer Bremskraftverstärker nach einem der vorhergehenden Ansprüche, dadurch gekennzeichnet, daß
- der zweite Abschnitt (18) des Ventilgehäuseteils (14) aus einem Kunststoff gebildet ist.

11. Pneumatischer Bremskraftverstärker nach einem der vorhergehenden Ansprüche, dadurch gekennzeichnet, daß
- der erste und der zweite Abschnitt (16, 18) des Ventilgehäuseteils (14) an ihren einander zugewandten Enden jeweils einen nach innen bzw. nach außen abgewinkelten Bund (56, 58) aufweisen, wobei der nach innen abgewinkelte Bund (56) und der nach außen abgewinkelte Bund (58) ineinander greifen.

12. Pneumatischer Bremskraftverstärker nach einem der vorhergehenden Ansprüche, dadurch gekennzeichnet, daß
- in dem ersten und/ oder dem zweiten Abschnitt (16,18) des Ventilgehäuseteils (14) wenigstens ein Kanal (28) für die Verbindungen zwischen der Unterdruckkammer und der Arbeitskammer, oder der Arbeitskammer und der Umgebungsatmosphäre angeordnet ist.

13. Pneumatischer Bremskraftverstärker nach dem vorhergehenden Anspruch, dadurch gekennzeichnet, daß
- das Ankergegenstück (26) und/ oder das magnetischen Fluß leitende Formteil (22) wenigstens eine Ausnehmung (22a, 26a) aufweist, die zumindest einen Teil des Kanals (28) bildet.

14. Pneumatischer Bremskraftverstärker nach dem vorhergehenden Anspruch, dadurch gekennzeichnet, daß
- jede Ausnehmung (22a, 26a) von Bereichen (22b) begrenzt ist, die magnetischen Fluß leiten.

15. Verfahren zur Herstellung eines pneumatischen Bremskraftverstärkers nach einem der vorhergehenden Ansprüche, mit folgenden Schritten:
- Bereitstellen eines ersten Abschnittes eines Ventilgehäuseteils,
- Bereitstellen eines zweiten Abschnittes eines Ventilgehäuseteils,
- Ausbilden eines ersten Verbindungselementes an dem ersten Abschnitt,
- Ausbilden eines zur Zusammenwirkung mit dem ersten Verbindungselement eingerichteten zweiten Verbindungselementes an dem zweiten Abschnitt, und
- Verbinden des ersten Abschnittes des Ventilgehäuseteils mit dem zweiten Abschnitt des Ventilgehäuseteils, dadurch gekennzeichnet, daß
- das erste Verbindungselement und das zweite Verbindungselement jeweils als ein an einem Ende des ersten und des zweiten Abschnittes des Ventilgehäuseteils ein nach innen bzw. nach außen abgewinkelter Bund geformt werden,
- der erste Abschnitt des Ventilgehäuseteils und der zweite Abschnitt des Ventilgehäuseteils in ihren Abmessungen so gestaltet sind, daß sie ineinander schiebbar sind, wobei der nach innen abgewinkelte Bund und der nach außen abgewinkelte Bund ineinander greifen und einen Anschlag bilden.

16. Verfahren zur Herstellung eines pneumatischen Bremskraftverstärkers nach dem vorherigen Anspruch, dadurch gekennzeichnet, daß
- zwischen den nach innen abgewinkelten Bund und den nach außen abgewinkelten Bund eine Dichtung eingelegt wird.

17. Verfahren zur Herstellung eines pneumatischen Bremskraftverstärkers nach dem vorherigen Anspruch, dadurch gekennzeichnet, daß
- in den ersten Abschnitt des Ventilgehäuseteils ein magnetischen Fluß leitendes Formteil, ein Anker, eine Magnetspulenanordung und ein Ankergegenstück eingelegt werden.

18. Verfahren zur Herstellung eines pneumatischen Bremskraftverstärkers nach dem vorherigen Anspruch, dadurch gekennzeichnet, daß
- der erste Abschnitt des Ventilgehäuseteils mit dem Ankergegenstück und/oder dem magnetischen Fluß leitenden Formteil fest verbunden wird.

19. Verfahren zur Herstellung eines pneumatischen Bremskraftverstärkers nach dem vorherigen Anspruch, dadurch gekennzeichnet, daß
- die Verbindung des ersten Abschnitts des Ventilgehäuseteils mit dem Ankergegenstück und/ oder dem magnetischen Fluß leitenden Formteil formschlüssig, vorzugsweise durch Rollieren oder Verstemmen hergestellt wird.

## Claims

1. A pneumatic brake booster, comprising:
- a booster housing part including a vacuum chamber and a working chamber separated therefrom by a movable wall, and
- a valve body part (14) including a control valve assembly (10) and an electromagnet assembly (12), wherein
= the control valve assembly (10) can be actuated both by an actuation rod (80) as well as by the electromagnet assembly (12), in order to make connections between the vacuum chamber and the working chamber, or between the working chamber and the ambient atmosphere,
- the valve body part (14) comprises several separate portions (16, 18),
characterized in that
- at least a first portion (16) of the valve body part (14) is:
= at least partially designed as a magnetic return of the electromagnet assembly (12), and
= coupled with a second portion (18) of the valve body part (14).

2. A pneumatic brake booster according to Claim 1, characterized in that
- the first portion (16) of the valve body part (14)
- at its outer surface comprises at least one seat (48) for parts of the booster.

3. A pneumatic brake booster according to Claim 1 or 2, characterized in that
- the first portion (16) of the valve body part (14) is made from soft iron.

4. A pneumatic brake booster according to one of the previous claims, characterized in that
- the first portion (16) of the valve body part (14) and the second portion (18) of the valve body part (14) are coupled in a positively engaging and/or air tight manner.

5. A pneumatic brake booster according to one of the previous claims, characterized in that
- the first portion (16) accommodates a solenoid assembly (20) and an armature (24) of the electromagnet assembly (12).

6. A pneumatic brake booster according to one of the previous claims, characterized in that
- the electromagnet assembly (12) is designed as a pot magnet.

7. A pneumatic brake booster according to the previous claim, characterized in that
- the solenoid assembly (20) comprises an armature counterpart (26) at its one axial end and a magnetic flux conducting shaped part (22) at its other axial end.

8. A pneumatic brake booster according to the previous claim, characterized in that
- the solenoid assembly (20), the armature counterpart (26) and the magnetic flux conducting shaped part (22) define an armature space (38) in which the armature (24) is movable.

9. A pneumatic brake booster according to the previous claim, characterized in that
- the solenoid assembly (20), the armature counterpart (26) and the magnetic flux conducting shaped part (22) surround the armature space (38) in an air tight manner.

10. A pneumatic brake booster according to one of the previous claims, characterized in that
- the second portion (18) of the valve body part (14) is made from a plastic material.

11. A pneumatic brake booster according to one of the previous claims, characterized in that
- the first and second portion (16, 18) of the valve body part (14) are provided each with a collar (56, 58) angled inwardly or outwardly, respectively, at their ends facing each other, with the inwardly angled collar (56) and the outwardly angled collar (58) engaging each other.

12. A pneumatic brake booster according to one of the previous claims, characterized in that
- in the first and/or the second portion (16, 18) of the valve body part (14) there is arranged at least one duct (28) for the connections between the vacuum chamber and the working chamber or the working chamber and the ambient atmosphere.

13. A pneumatic brake booster according to the previous claim, characterized in that
- the armature counterpart (26) and/or the magnetic flux conducting shaped part (22) comprises at least one recess (22a, 26a), which forms at least part of the duct (28).

14. A pneumatic brake booster according to the previous claim , characterized in that
- each recess (22a, 26a) is limited by areas (22b) which are conductive for the magnetic flux.

15. A method for manufacturing a pneumatic brake booster according to one of the previous claims, comprising the following steps:
- providing a first portion of a valve body part,
- providing a second portion of a valve body part,
- forming a first coupling element at the first portion,
- forming a second coupling element at the second portion, which is adapted to cooperate with the first coupling element, and
- coupling the first portion of the valve body part with the second portion of the valve body part, characterized in that
- the first coupling element and the second coupling element are formed so as to define an inwardly or outwardly, respectively, angled collar at one end of the first and second portion of the valve body part,
- the first portion of the valve body part and the second portion of the valve body part are so designed with respect to their dimensions that they can be slid one into the other, with the inwardly angled collar and the outwardly angled collar engaging each other and forming a stop.

16. A method for manufacturing a pneumatic brake booster according to the previous claim, characterized in that
- a seal is placed between the inwardly angled collar and the outwardly angled collar.

17. A method for manufacturing a pneumatic brake booster according to the previous claim, characterized in that
- a magnetic flux conducting shaped part, an armature, a solenoid assembly and an armature counterpart are inserted into the first portion of the valve body part.

18. A method for manufacturing a pneumatic brake booster according to the previous claim, characterized in that
- the first portion of the valve body part is securely connected with the armature counterpart and/or the magnetic flux conducting shaped part.

19. A method for manufacturing a pneumatic brake booster according to the previous claim, characterized in that
- the coupling of the first portion of the valve body part with the armature counterpart and/or the magnetic flux conducting shaped part is made in a positively engaging manner, preferably by rolling or caulking.

## Revendications

1. Amplificateur de freinage pneumatique comprenant
- une partie de boitier d'amplificateur contenant une chambre de dépression et une chambre de travail séparée de la première par une paroi mobile et
- une partie de boitier de soupape (14) contenant un ensemble de distribution et de régulation (10) et un système électromagnétique (12), dans lequel
= l'ensemble de distribution et de régulation (10) peut être actionné aussi bien par une tige d'actionnement (80) que par le système électromagnétique (12) pour établir des communications entre la chambre de dépression et la chambre de travail ou entre la chambre de travail et l'atmosphère environnante,
- la partie de boitier de soupape (14) présente plusieurs portions séparées (16, 18),
caractérisé en ce que
- au moins une première portion (16) de la partie de boitier de soupape (14)
= est configurée au moins partiellement en retour magnétique du système électromagnétique (12) et
= est reliée à une deuxième portion (18) de la partie de boîtier de soupape (14).

2. Amplificateur de freinage pneumatique selon la revendication 1, caractérisé en ce que
- la première portion (16) de la partie de boîtier de soupape (14) présente sur sa face extérieure au moins un logement (48) pour des pièces de l'amplificateur.

3. Amplificateur de freinage pneumatique selon la revendication 1 ou 2, caractérisé en ce que
- la première portion (16) de la partie de boîtier de soupape (14) est en fer doux.

4. Amplificateur de freinage pneumatique selon l'une quelconque des revendications précédentes, caractérisé en ce que
- la première portion (16) de la partie de boîtier de soupape (14) et la deuxième portion (18) de la partie de boîtier de soupape (14) sont reliées entre elles par engagement mécanique et / ou de façon étanche à l'air.

5. Amplificateur de freinage pneumatique selon l'une quelconque des revendications précédentes, caractérisé en ce que
- un système de bobine d'électroaimant (20) et un induit (24) de l'ensemble électromagnétique (12) sont logés dans la première portion (16).

6. Amplificateur de freinage pneumatique selon l'une quelconque des revendications précédentes, caractérisé en ce que
- l'ensemble électromagnétique (12) est un électroaimant cuirassé.

7. Amplificateur de freinage pneumatique selon la revendication précédente, caractérisé en ce que
- le système de bobine d'électroaimant (20) présente à l'une de ses extrémités axiales une pièce antagoniste de l'induit (26) et à son autre extrémité axiale une pièce formée (22) conductrice du flux magnétique.

8. Amplificateur de freinage pneumatique selon la revendication précédente, caractérisé en ce que
- le système de bobine d'électroaimant (20), la pièce antagoniste de l'induit (26) et la pièce formée conductrice de flux magnétique (22) forment un espace d'induit dans lequel l'induit (24) est mobile.

9. Amplificateur de freinage pneumatique selon la revendication précédente, caractérisé en ce que
- le système de bobine d'électroaimant (20), la pièce antagoniste de l'induit (26) et la pièce formée conductrice du flux magnétique (22) entourent l'espace d'induit (38) de façon étanche à l'air.

10. Amplificateur de freinage pneumatique selon l'une quelconque des revendications précédentes, caractérisé en ce que
- la deuxième portion (18) de la partie de boitier de soupape (14) est en une matière synthétique.

11. Amplificateur de freinage pneumatique selon l'une quelconque des revendications précédentes, caractérisé en ce que
- la première et la deuxième portions (16, 18) de la partie de boîtier de soupape (14) présentent à leurs extrémités se faisant face chacune une collerette (56, 58) repliée vers l'intérieur respectivement vers l'extérieur, la collerette repliée vers l'intérieur (56) et la collerette repliée vers l'extérieur (58) étant en prise l'une avec l'autre.

12. Amplificateur de freinage pneumatique selon l'une quelconque des revendications précédentes, caractérisé en ce que
- au moins un canal (28) destiné aux communications entre la chambre de dépression et la chambre de travail ou entre la chambre de travail et l'atmosphère environnante est disposé dans la première et / ou dans la deuxième portion (16, 18) de la partie de boîtier de soupape (14).

13. Amplificateur de freinage pneumatique selon la revendication précédente, caractérisé en ce que
- la pièce antagoniste de l'induit (26) et / ou la pièce formée conductrice du flux magnétique (22) présentent au moins un creux (22a, 26a) qui forme au moins une partie du canal (28).

14. Amplificateur de freinage pneumatique selon la revendication précédente, caractérisé en ce que
- chaque creux (22a, 26a) est délimité par des zones (22b) qui conduisent le flux magnétique.

15. Procédé de fabrication d'un amplificateur de freinage pneumatique selon l'une quelconque des revendications précédentes, comprenant les opérations consistant à
- se munir d'une première portion d'une partie de boîtier de soupape,
- se munir d'une deuxième portion d'une partie de boîtier de soupape,
- former un premier élément de liaison sur la première portion,
- former, sur la deuxième portion, un deuxième élément de liaison conçu pour coopérer avec le premier élément de liaison,
- relier la première portion de la partie de boîtier de soupape avec la deuxième portion de la partie de boîtier de soupape, caractérisé en ce que
- le premier élément de liaison et le deuxième élément de liaison sont respectivement formés sous forme de collerettes à une extrémité de la première et de la deuxième portions de la partie de boitier de soupape repliées vers l'intérieur respectivement vers l'extérieur,
- la première portion de la partie de boîtier de soupape et la deuxième portion de la partie de boîtier de soupape sont dimensionnées de telle façon qu'elles puissent coulisser l'une dans l'autre, la collerette repliée vers l'intérieur et la collerette repliée vers l'extérieur étant en prise l'une avec l'autre et formant un arrêt.

16. Procédé de fabrication d'un amplificateur de freinage pneumatique selon la revendication précédente, caractérisé en ce que
- une garniture d'étanchéité est disposée entre la collerette repliée vers l'intérieur et la collerette repliée vers l'extérieur.

17. Procédé de fabrication d'un amplificateur de freinage pneumatique selon la revendication précédente, caractérisé en ce que
- une pièce formée conductrice du flux magnétique, un induit, un système de bobine d'électroaimant et une pièce antagoniste de l'induit sont montés dans la première portion de la partie de boitier de soupape.

18. Procédé de fabrication d'un amplificateur de freinage pneumatique selon la revendication précédente, caractérisé en ce que
- la première portion de la partie de boitier de soupape est reliée de façon fixe à la pièce antagoniste de l'induit et / ou à la pièce formée conductrice du flux magnétique.

19. Procédé de fabrication d'un amplificateur de freinage pneumatique selon la revendication précédente, caractérisé en ce que
- la liaison de la première portion de la partie de boîtier de soupape avec la pièce antagoniste de l'induit et / ou la pièce formée conductrice du flux magnétique est réalisée par engagement mécanique, de préférence par roulage ou par matage.
